# EUROPÄISCHE PATENTSCHRIFT

(11) **EP 3 714 675 B1**
(45) Veröffentlichungstag und Bekanntmachung des Hinweises auf die Patenterteilung: **04.11.2026**
(21) Anmeldenummer: 19214364.2
(22) Anmeldetag: 09.12.2019
(51) Int. Cl.: A01D 41/127, A01D 41/12, A01F 7/06, A01F 12/40

(54) **VERFAHREN ZUM BETRIEB EINES MÄHDRESCHERS SOWIE SELBSTFAHRENDER MÄHDRESCHER**
METHOD FOR OPERATING A COMBINE AND SELF-PROPELLED COMBINE
PROCÉDÉ DE FONCTIONNEMENT D'UNE MOISSONNEUSE-BATTEUSE AINSI QUE MOISSONNEUSE-BATTEUSE AUTONOME

(30) Priorität: 27.03.2019 DE 102019107840
(43) Veröffentlichungstag der Anmeldung: 30.09.2020
(73) Patentinhaber: CLAAS Selbstfahrende Erntemaschinen GmbH, 33428 Harsewinkel (DE)
(72) Erfinder: Bußmann, Jens, 49179 Ostercappeln (DE); Holtmann, Bernd, 48324 Sendenhorst (DE); Diekamp, Andreas, 49176 Hilter (DE); Pölling, Benedikt, 48653 Coesfeld (DE)
(74) Vertreter: CLAAS Gruppe

(56) Entgegenhaltungen:
- EP-A1- 1 350 424
- US-A1- 2014 066 148
- US-B1- 7 485 035

## Beschreibung

Die vorliegende Anmeldung betrifft ein Verfahren zum Betrieb eines Mähdreschers gemäß dem Oberbegriff von Anspruch 1. Ferner betrifft die vorliegende Anmeldung einen selbstfahrenden Mähdrescher gemäß dem Oberbegriff von Anspruch 10.

Der Mähdrescher umfasst in aller Regel ein Dreschorgan, mittels dessen von geernteten Pflanzen Früchte ablösbar sind, die gesondert von verbleibenden Pflanzenresten der Pflanzen gewonnen werden sollen. Ein Gemisch von abgelösten Früchten und Pflanzenresten wird als Erntegutstrom ausgehend von dem Dreschorgan mindestens einem nachgeschalteten Axialabscheider zugeleitet. Dieser ist typischerweise derart ausgebildet, dass er ein Gehäuse umfasst, das einen kreisförmigen Querschnitt aufweist, sowie einen darin befindlichen, drehangetriebenen Axialrotor. Eine Längsachse des Axialrotors erstreckt sich parallel zu einer Mittelachse des Gehäuses. Mittels Betriebs des Axialrotors wird aus dem Erntegutstrom ein Gutanteil abgeschieden, der zumindest im Wesentlichen von den abgelösten Früchten gebildet ist. Der Erntegutstrom wird auf diese Weise in einen Restgutstrom überführt, der an einem rückwärtigen Ende des Mähdreschers ausgeworfen wird. Der Restgutstrom ist nach der Behandlung mittels des Axialabscheiders zumindest im Wesentlichen frei von Früchten. In bekannten Mähdreschern ist es üblich, dass mehrere Axialabscheider, insbesondere zwei Axialabscheider, parallel verwendet werden.

Der Restgutstrom wird aus dem Axialabscheider an ein nachgeschaltetes Arbeitsorgan des Mähdreschers, insbesondere ein Häckselorgan, übergeben, wobei der Restgutstrom mittels mindestens eines bewegbaren Leitelements über eine Breite des Arbeitsorgans verteilt wird. Bei einer Ausgestaltung des Arbeitsorgans als Häckselorgan, weist das Arbeitsorgan typischerweise eine langgestreckte Abtriebswelle mit daran angeordneten Schlagmessern auf. Diese dienen dazu, den Restgutstrom zu bearbeiten, insbesondere zu zerkleinern bzw. zu häckseln. Dies ist insbesondere dann von Bedeutung, wenn das aus dem Mähdrescher abgeworfen Restgut nicht weiter verwertet werden soll, insbesondere nicht vom Feld aufgehoben und einem weiteren Verwendungszweck zugeführt werden soll. Die Zerkleinerung des Restguts ist vorteilhaft, um die biologische Zersetzung und die damit verbundene Rückführung von Nährstoffen in den Boden zu beschleunigen.

Um grundsätzlich die Verteilung des Restgutstroms zu gewährleisten, umfasst der Mähdrescher mindestens zwei Auswurfeinrichtungen, an die der Restgutstrom stromabwärts des jeweilig dem Axialabscheider nachgeschalteten Arbeitsorgans übergeben wird. Typischerweise korrespondiert eine erste Auswurfeinrichtung mit einer linken Seite des Arbeitsorgans, die andere Auswurfeinrichtung mit der rechten Seite. Mittels der Auswurfeinrichtungen wird der Restgutstrom schließlich aus dem Mähdrescher ausgeworfen. Bei den Auswurfeinrichtungen kann es sich insbesondere um Radialgebläse handeln, mittels derer der Restgutstrom beschleunigt und sodann möglichst gleichmäßig auf dem Feld verteilt wird.

Ein Verfahren der vorstehend beschriebenen Art ist im Stand der Technik bereits bekannt. Hierzu wird beispielhaft auf die Europäische Patentschrift EP 2 364 587 B1 hingewiesen. Diese betrifft einen Axialabscheider für einen Mähdrescher, der mit einem bewegbaren Leitelement ausgestattet ist. Mittels des Leitelements wird der technische Effekt erzielt, das von dem Axialabscheider an das Häckselorgan übergebene Restgut möglichst gleichmäßig auf das Häckselorgan zu verteilen. Hierzu wirkt das Leitelement mit einem Aktor zusammen, mittels dessen das Leitelement relativ zu dem Gehäuse des Axialabscheiders bewegbar ist. Das Leitelement befindet sich dabei in einem Strömungsbereich des übergebenen Restgutstroms, sodass der Restgutstrom auf das Leitelement trifft und hierdurch umlenkbar ist. Mittels Bewegung des Leitelements kann die Ablenkung des Restgutstroms verändert und mithin der Restgutstrom gezielt auf verschiedene Bereiche des Häckselorgans verteilt werden.

Die EP 1 350 424 A1 offenbart einen Mähdrescher mit zwei Axialabscheidern, denen nachgelagert ein Strohhäcksler angeordnet ist. Am Auslass der Axialabscheider ist jeweils ein Leitelement angeordnet, welches um eine vertikale Achse schwenkbar angeordnet ist. Die Ist-Gutverteilung am Strohhäcksler wird sensorisch erfasst und an eine Steuerungseinrichtung für den Abgleich mit einer gleichmäßigen Soll-Verteilung übermittelt. Auf Grundlage des Abgleichs der Ist-Verteilung mit der Soll-Verteilung werden die Leitelemente motorisch verschwenkt, um so eine Störgröße in der Gutstromverteilung zu beseitigen und eine möglichst gleichmäßige Beaufschlagung des Strohhäckslers zu erreichen.

Vergleichbare Verfahren sind auch aus der US 7 485 035 B1 oder der US 2014/066148 A1 bekannt, wobei jeweils über ein bewegliches Leitelement Einfluss auf die Reststromverteilung oder die Auswurfgeschwindigkeit genommen wird.

Trotz derartiger Maßnahmen hat sich gezeigt, dass die Verteilung des Restgutstroms auf dem Feld weiter verbesserungswürdig ist. Dies betrifft insbesondere die Verteilung der in dem Restgutstrom vorhandenen restlichen Früchte, die nach Ablage auf dem Feld neu austreiben und ein Wurzelwerk ausbilden. Eine mangelnde Verteilung dieser restlichen Früchte führt dazu, dass streifenartige Bereiche auf dem Feld konzentriert mit restlichen Früchten beaufschlagt sind, wodurch der Boden in diesen Bereichen durch die sich ausbildenden Wurzeln befestigt wird. Die zu einem späteren Zeitpunkt stattfindende Bodenbearbeitung durch den Landwirt wird hierdurch erschwert. Es ist daher wünschenswert, den Restgutstrom mitsamt den darin enthaltenen Früchten möglichst homogen auf dem Feld zu verteilen, sodass lokale Befestigungen des Bodens möglichst schwach ausgeprägt sind.

Der vorliegenden Anmeldung liegt mithin die Aufgabe zugrunde, die Verteilung des Restgutstroms auf dem Feld weiter zu verbessern.

Die zugrunde liegende Aufgabe wird erfindungsgemäß durch das Verfahren mit den Merkmalen des Anspruchs 1 gelöst. Vorteilhafte Ausgestaltungen ergeben sich aus den Unteransprüchen 2 bis 9.

Das erfindungsgemäße Verfahren ist dadurch gekennzeichnet, dass eine Ist-Verteilung des Restgutstroms auf mindestens zwei Auswurfeinrichtungen erfasst wird. Anschließend wird bei Feststellen einer Abweichung der erfassten Ist-Verteilung von einer vorgegebenen Soll-Verteilung das Leitelement des Axialabscheiders derart nachgeregelt, dass die Ist-Verteilung der Soll-Verteilung zumindest angenähert wird.

Die Erfassung der Ist-Verteilung erfolgt erfindungsgemäß mittels mindestens einer Sensoreinrichtung an mindestens einer Messstelle stromabwärts des Axialabscheiders erfolgen, wobei die Sensoreinrichtung Daten betreffend die Ist-Verteilung erfasst. Die auf diese Weise erfassten Daten werden sodann an eine Regeleinheit geleitet und mittels letzterer verarbeitet. Die Untersuchung auf die oben genannte Abweichung zwischen Ist- und Soll-Verteilung kann mittels einer solchen Regeleinheit besonders einfach bewerkstelligt werden.

In einer beispielhaften Ausgestaltung ist es denkbar, dass in einem Übergabebereich zwischen einem als Häckselorgan ausgebildeten Arbeitsorgan und den mindestens zwei Auswurfeinrichtungen an mindestens einer Messstelle mittels einer Sensoreinrichtung Daten erfasst werden, anhand derer erkennbar ist, in welchem Verhältnis die beiden Auswurfeinrichtungen mit von dem Häckselorgan stammenden Restgut beschickt werden. Diese Daten beschreiben mithin die genannte Ist-Verteilung. Die vorgegebene Soll-Verteilung kann insbesondere ein ausgeglichenes Verteilverhältnis vorsehen, gemäß dessen das Restgut 50:50 aufgeteilt wird, sodass beide Auswurfeinrichtungen zu gleichen Teilen mit Restgut beschickt werden. Mittels der Sensoreinrichtung würde eine von dieser Soll-Verteilung abweichende Ist-Verteilung erfasst und an die Regeleinheit geleitet werden. Die Regeleinheit ist in diesem Beispiel dazu geeignet, in Abhängigkeit von der festgestellten Abweichung der Ist-Verteilung von der Soll-Verteilung Regelungsbefehle zu erzeugen und diese an das Leitelement zu übermitteln. Auf diese Weise wird das Leitelement derart nachgeregelt, dass die Ist-Verteilung der Soll-Verteilung zumindest angenähert wird. Mithin findet im Ergebnis eine Rückkopplung zwischen einer tatsächlichen Ist-Verteilung des Restgutstroms und der vorgegebenen Soll-Verteilung des Restgutstroms auf das Arbeitsorgan statt, die vorzugsweise fortwährend durchgeführt wird. Die Sensoreinrichtung, die Regeleinheit und das Leitelement bilden mithin einen Regelkreis. Eine Regelfrequenz des so gebildeten Regelkreises kann beispielsweise 10 Hz betragen. Andere Regelfrequenzen, sowohl höhere als auch niedrigere, sind gleichermaßen denkbar.

Das erfindungsgemäße Verfahren hat viele Vorteile. Insbesondere verhilft es dazu, die Verteilung des Restgutstroms zu optimieren, sodass das Restgut im Zuge des Auswurfs aus dem Mähdrescher möglichst gleichmäßig auf dem Feld verteilt wird. Insbesondere kann die Nachregelung des Leitelements einen unmittelbaren oder mittelbaren Einfluss auf die Ist-Verteilung des Restgutstroms nehmen, der sich sodann in der vorgegebenen Soll-Verteilung zumindest annähert, idealerweise die Soll-Verteilung erreicht. Dies hat zur Folge, dass die Verteilung des Restgutstroms auf dem Feld besonders gleichmäßig erfolgt.

In einer vorteilhaften Ausgestaltung des erfindungsgemäßen Verfahrens kann eine Regeleinheit verwendet werden, mittels der in Abhängigkeit von der Abweichung zwischen Ist- und Soll-Verteilung Regelungsbefehle erzeugt und mittelbar oder unmittelbar an das Leitelement geleitet werden. Insbesondere können die Regelungsbefehle an einen Aktor des Leitelements geleitet werden, mittels dessen das Leitelement angetrieben wird. In einer besonders vorteilhaften Ausgestaltung sind auf der Regeleinheiz (bzw. einem Datenspeicher derselben) Kennfelder hinterlegt, mittels derer Daten betreffend die Ist-Verteilung des Restgutstroms in Beziehung zu einer Bewegungscharakteristik des Leitelements gesetzt sind, sodass anhand solcher Kennfelder ableitbar ist, in welcher Weise die Bewegungscharakteristik des Leitelements verändert werden sollte, um die Ist-Verteilung in Richtung der angestrebten Soll-Verteilung zu verändern.

Eine weiterhin vorteilhafte Ausgestaltung sieht vor, dass mittels einer Mehrzahl von Sensoreinrichtungen Daten betreffend die Ist-Verteilung des Restgutstroms erfasst werden. Vorzugsweise sind die Sensoreinrichtungen an verschiedenen Messstellen angeordnet. Auf diese Weise können Veränderungen der Ist-Verteilung des Restgutstroms besser beobachtet und entsprechende Regelungsbefehle für das Leitelement zielgerichteter sowie zeitnah erfolgen.

Weiterhin kann eine solche Ausgestaltung des erfindungsgemäßen Verfahrens vorteilhaft sein, bei dem die Regelung des Leitelements automatisch erfolgt. Dies kann insbesondere in Abhängigkeit eines auf der Regeleinheit hinterlegten Regelungsalgorithmus geschehen, der in Abhängigkeit der erfassten Daten automatisch daraus abgeleitete Regelungsbefehle an das Leitelement übermittelt und auf diese Weise dessen Bewegung beeinflusst. Beispielsweise ist es denkbar, dass eine Bewegungsgeschwindigkeit des Leitelements verändert wird, sodass eine Verteilung des von dem Axialabscheider an ein als Häckselorgan ausgebildetes Arbeitsorgan übergebenen Restgutstroms verändert wird. Die Veränderung der Verteilung des Restgutstroms über die Breite des Häckselorgans hat dabei eine vorhersagbare Auswirkung auf die Verteilung des das Häckselorgan verlassenen Restgutstroms auf die nachgeschalteten Auswurfeinrichtungen. Beispielsweise ist es denkbar, dass bei einer Hanglage des zu bearbeitenden Feldes die Verteilung des Restgutstroms über die Breite des Häckselorgans infolge der wirkenden Schwerkraft asymmetrisch wird, sodass beispielsweise die linke Seite des Häckselorgans einen größeren Anteil des Restgutstroms erhält als die rechte Seite. Hierdurch würde sich eine ungleiche Beschickung der Auswurfeinrichtungen ergeben, was eine Abweichung von der Soll-Verteilung zur Folge hätte, die hier beispielhaft zu einem ausgeglichenen Verteilungsverhältnis zwischen den Auswurfeinrichtungen gewählt ist. Dieser ungleichen Beschickung der Auswurfeinrichtungen kann nunmehr mittels einer Veränderung der Bewegungscharakteristik des Leitelements entgegengesteuert werden. Letzteres kann beispielsweise derart bewegt werden, dass es den Restgutstrom vermehrt in Richtung der rechten Seite des Häckselorgans lenkt, sodass die beiden Hälften des Häckselorgans (und infolgedessen die beiden Auswurfeinrichtungen) möglichst gleichmäßig mit Restgut beschickt werden. Die automatische Regelung des Leitelements macht einen Eingriff eines Maschinenführers entbehrlich, wobei insbesondere eine fortwährende Regelung des Leitelements erfolgen kann. Der erfindungsgemäße Regelkreis kann auf diese Weise mit einer hohen Abtastrate betrieben werden, sodass die Ist-Verteilung fortwährend beeinflusst wird mit der Zielsetzung, die vorgegebene Soll-Verteilung zu erhalten.

In besonders vorteilhafter Weise werden die Daten betreffend die Ist-Verteilung des Restgutstroms fortwährend erfasst, vorzugsweise mit einer Frequenz von mindestens 10 Hz. Entsprechend kann es besonders vorteilhaft sein, wenn dem Leitelement fortwährend Regelungsbefehle zugeleitet werden, wobei insbesondere eine Bewegungsgeschwindigkeit des Leitelements fortwährend verändert wird. Die Verteilung des Restgutstroms auf das Feld unterliegt bei einem solchen Vorgehen einer dauerhaften Überwachung, die bei Erfassung von Abweichungen zwischen der Ist-Verteilung und der vorgegebenen Soll-Verteilung unmittelbar in Konsequenzen erwächst, sodass die Abweichung zumindest reduziert wird.

In einer besonders vorteilhaften Ausgestaltung des erfindungsgemäßen Verfahrens werden über die Ist-Verteilung des Restgutstroms hinaus weitere Daten erfasst. Diese können insbesondere eine Art des jeweiligen Ernteguts, herrschende Erntebedingungen, Maschinendaten des Mähdreschers und/oder eine Soll-Schwadbreite des ausgeworfenen Restgutstroms betreffen. Daten betreffend das jeweilige Erntegut können beispielsweise vor Erntebeginn von einem Maschinenführer des Mähdreschers eingegeben werden, wobei sich diese Information während eines Erntevorgangs in der Regel nicht verändert. Erntebedingungen wie beispielsweise Witterungsbedingungen (Wind, Regen etc.), Umgebungsbedingungen (Neigung des Feldes, Bodenbeschaffenheit etc.), Betriebsbedingungen des Mähdreschers (Fahrgeschwindigkeit, angestrebter Restkornanteil etc.) können jeweils individuell einmalig, periodisch oder durchgehend erhoben werden. Die Maschinendaten des Mähdreschers sind in aller Regel während eines laufenden Erntevorgangs unverändert. Daten betreffend die Soll-Schwadbreite können insbesondere von dem Maschinenführer vorgegeben werden, worauf hin sie entsprechend berücksichtigt werden können. Derartige zusätzliche Daten können insbesondere mittels einer Regeleinheit verarbeitet werden, sodass sie für die Erzeugung von Regelungsbefehlen für das Leitelement zusätzlich berücksichtigt werden können. Hierdurch kann die Verteilung des Restguts auf dem Feld weiter verbessert werden.

Neben einer Regelung des mindestens einen Leitelements des mindestens einen Axialabscheiders kann es zudem vorteilhaft sein, wenn die Regeleinheit Regelungsbefehle für mindestens ein Verteilblech einer den Auswurfeinrichtungen nachgeschalteten Verteileinrichtung erzeugt und an das jeweilige Verteilblech leitet. Letzteres ist bewegbar relativ zu der restlichen Verteileinrichtung angeordnet, sodass sich mittels einer Bewegung des Leitelements eine Auswurfcharakteristik des Restgutstroms verändert. Die Verteileinrichtung umfasst eine Mehrzahl von Verteilblechen, die dazu geeignet sind, den von den Auswurfeinrichtungen abgegebenen Restgutstrom aufzufächern. Dies ist in aller Regel erforderlich, um den Restgutstrom über eine Breite zu verteilen, die eine Breite des rückwärtigen Endes des Mähdreschers deutlich übersteigt. Insbesondere ist es gewünscht, den Restgutstrom über die Breite eines Schneidwerks des Mähdreschers zu verteilen, da letzteres eine Arbeitsbreite des Mähdreschers definiert. Eine gleichmäßige Verteilung des Restgutstroms über die Arbeitsbreite des Mähdreschers würde mithin die Fläche des jeweiligen Feldes, auf dem der Restgutstrom abgelegt wird, vollständig ausschöpfen. Dies ist zu begrüßen, um die Dichte von in dem Restgutstrom verbliebenen Früchten pro Flächenanteil des Feldes zu minimieren.

Bei Vorhandensein einer vorstehend beschriebenen Verteileinrichtung ist es zudem vorteilhaft, wenn an bzw. in der Verteileinrichtung mindestens eine Messstelle angeordnet ist, an der mittels mindestens einer Sensoreinrichtung Daten betreffend eine Ist-Verteilung des Restgutstroms erfasst werden. Diese können sodann mittels einer Regeleinheit mit einer vorgegebenen Soll-Verteilung verglichen werden, woraufhin die Regeleinheit für das mindestens eine verstellbare Verteilblech Regelungsbefehle erzeugt und diese mittelbar oder unmittelbar an das Verteilblech leitet. Das Verteilblech kann hierdurch relativ zu der übrigen Verteileinrichtung bewegt werden, sodass sich die Verteilung des Restgutstroms in Richtung der Soll-Verteilung zumindest annähert. Zwecks Bewegung des Verteilblechs kann selbiges beispielsweise mit einem elektrischen oder hydraulischen Aktor zusammenwirken.

In vorrichtungstechnischer Hinsicht wird die zugrunde liegende Aufgabe mittels eines Mähdreschers mit den Merkmalen des Anspruchs 10 gelöst. Vorteilhafte Ausgestaltungen ergeben sich aus den Unteransprüchen 11 bis 14.

Der erfindungsgemäße Mähdrescher umfasst mindestens eine Sensoreinrichtung, mittels der Daten betreffend eine Ist-Verteilung des Restgutstroms auf die mindestens zwei Auswurfeinrichtungen erfassbar sind. Ferner umfasst der erfindungsgemäße Mähdrescher mindestens eine Regeleinheit, mittels der von der Sensoreinrichtung erfasste Daten verarbeitbar sind, wobei der erfindungsgemäße Mähdrescher zur Durchführung des Verfahrens gemäß Anspruch 1 eingerichtet ist.

Die Sensoreinrichtung und die Regeleinheit sind in Daten übertragender Weise miteinander verbunden, beispielsweise mittels einer körperlichen Leitung oder kabellos, sodass Daten von der Sensoreinrichtung an die Regeleinheit leitbar sind. Ebenso sind die Regeleinheit und das Leitelement in Daten übertragender Weise miteinander verbunden, sodass Regelungsbefehle von der Regeleinheit mittelbar oder unmittelbar an das Leitelement leitbar sind. Insbesondere kann das Leitelement mit einem Aktor zusammenwirken, der die Regelungsbefehle erhält und entsprechend eine Bewegung des Leitelements vornimmt.

Das erfindungsgemäße Verfahren ist mittels des erfindungsgemäßen Mähdreschers besonders einfach umsetzbar. Die sich hierdurch ergebenden Vorteile sind vorstehend bereits dargelegt. Insbesondere wird die Möglichkeit geschaffen, eine Ist-Verteilung des Restgutstroms an eine Soll-Verteilung zumindest anzunähern, sodass eine gegenüber dem Stand der Technik gleichmäßigere Verteilung des Restgutstroms auf dem Feld erzielt werden kann.

Den erfindungsgemäßen Mähdrescher weiter ausgestaltend ist mindestens eine Sensoreinrichtung an mindestens einer Messstelle in einem Einfallbereich eines als Häckselorgan ausgebildeten Arbeitsorgans angeordnet. Der Einfallbereich des Häckselorgans beschreibt denjenigen Bereich, in den das von dem Axialabscheider stammende Restgut in das Häckselorgan einfällt. Mittels der Anordnung der Sensoreinrichtung an dieser Messstelle wird die Möglichkeit geschaffen, die Verteilung des Restgutstroms über eine Breite des Häckselorgans hinweg zu erfassen.

Alternativ oder zusätzlich kann mindestens eine Sensoreinrichtung an mindestens einer Messstelle an bzw. in einem Bodenblech eines solchen Häckselorgans angeordnet sein. Mittels Anordnung einer Sensoreinrichtung an einer solchen Messstelle wird die Möglichkeit geschaffen, die Verteilung des Restgutstroms innerhalb des Häckselorgans zu erfassen. Die Kombination dieser Messstelle mit der vorstehend beschriebenen Messstelle in dem Einfallbereich des Häckselorgans ist besonders vorteilhaft, um eine Verteilung des Restgutstroms über die Breite des Häckselorgans dynamisch verfolgen zu können. Insbesondere können durch den Betrieb des Häckselorgans bedingte Wanderungen des Restgutstroms in Breitenrichtung des Häckselorgans stattfinden, die bei alleiniger Erfassung von Daten betreffend die Ist-Verteilung des Restgutstroms beispielsweise in dem Einfallbereich des Häckselorgans nicht berücksichtigt werden könnten.

Schließlich kann es weiterhin vorteilhaft sein, mindestens eine Sensoreinrichtung an mindestens einer Messstelle an einer Verteileinrichtung anzuordnen, die den Auswurfeinrichtungen nachgeschaltet ist. Die Anordnung einer Sensoreinrichtung an dieser Messstelle kann zusätzlich oder alternativ zu den vorgenannten Messstellen erfolgen. In besonders vorteilhafter Weise sind Sensoreinrichtungen an allen drei beschriebenen Messstellen angeordnet. Die in der Verteileinrichtung angeordnete Messstelle bietet den besonderen Vorteil, dass die dort erfassten Daten eine Aussage über die Ist-Verteilung des Restgutstroms unmittelbar vor dem Verlassen des Mähdreschers ermöglichen. Eine Veränderung der Bewegungscharakteristik des Leitelements hat auf die Ist-Verteilung des Restgutstroms in der Verteileinrichtung lediglich einen mittelbaren Einfluss, erlaubt jedoch das Aufdecken von Korrelationen zwischen Veränderungen der Bewegungscharakteristik des Leitelements und der Verteilung des Restgutstroms in der Verteileinrichtung. Zudem ermöglicht die Anordnung mindestens einer Sensoreinrichtung in der Verteileinrichtung die Regelung mindestens eines Verteilblechs der Verteileinrichtung, wie vorstehend beschrieben ist.

Die Erfassung von Daten an mehreren Messstellen ermöglicht gewissermaßen eine Nachverfolgung des Restguts ausgehend von dem Axialabscheider bis zum Verlassen des Mähdreschers. Der Einfluss einer Veränderung der Bewegungscharakteristik des Leitelements kann auf diese Weise besonders gut nachverfolgt werden.

Schließlich ist ein solcher Mähdrescher besonders vorteilhaft, bei dem mindestens eine Sensoreinrichtung in Form einer Messleiste ausgebildet ist. Eine solche Messleiste umfasst eine Mehrzahl voneinander beabstandeter Sensorelemente, die vorzugsweise äquidistant entlang der Messleiste verteilt angeordnet sind. Insbesondere ist es denkbar, dass eine als Messleiste ausgebildete Sensoreinrichtung sich jeweils über eine Breite eines jeweilig überwachten Bereichs hinweg erstreckt, sodass eine Querverteilung des Restguts in dem jeweiligen Bereich erfassbar ist. Bei einer beispielsweise in dem Einfallbereich eines Häckselorgans angeordneten Sensoreinrichtung kann sich die als Messleiste ausgebildete Sensoreinrichtung über die Breite des Häckselorgans hinweg erstrecken, wobei eine Mehrzahl, beispielsweise fünf, Sensorelemente über die Länge der Messleiste hinweg verteilt angeordnet sind. Auf diese Weise erfasste Daten sind besonders gut geeignet, die Ist-Verteilung des Restgutstroms zu beurteilen. Bei Zurverfügungstellen derartiger Daten kann die Regeleinheit besonders zielgerichtete Regelungsbefehle für das Leitelement erzeugen sowie Veränderungen der Ist-Verteilung infolge der Regelungsbefehle nachverfolgen.

Die Erfindung ist nachstehend anhand eines Ausführungsbeispiels, das in den Figuren dargestellt ist, näher erläutert. Es zeigt:
- Fig. 1:: Einen Querschnitt durch einen erfindungsgemäßen Mähdrescher,
- Fig. 2:: Eine schematische Ansicht eines rückwärtigen Endes eines Axialabscheiders sowie eines als Häckselorgan ausgebildeten, nachgeschalteten Arbeitsorgans,
- Fig. 3:: Eine schematische Ansicht einer Restgutverteilung ausgehend von dem Axialabscheider an das Häckselorgan bei Vorliegen eines Leitelements in einer ersten Stellung,
- Fig. 4:: die schematische Ansicht gemäß Figur 3, wobei das Leitelement in einer zweiten Stellung vorliegt,
- Fig. 5:: Eine perspektivische Ansicht des Häckselorgans, wobei in einem Einfallbereich des Häckselorgans eine Sensoreinrichtung angeordnet ist,
- Fig. 6:: Eine Rückansicht des Häckselorgans gemäß Figur 5,
- Fig. 7:: Eine perspektivische Ansicht eines Bodenbereichs des Häckselorgans, wobei in einem Bodenblech des Häckselorgans eine Sensoreinrichtung angeordnet ist,
- Fig. 8:: Eine perspektivische Ansicht einer Verteileinrichtung, die mit einer Sensoreinrichtung ausgestattet ist und
- Fig. 9:: eine weitere Ansicht der Verteileinrichtung gemäß Figur 8.

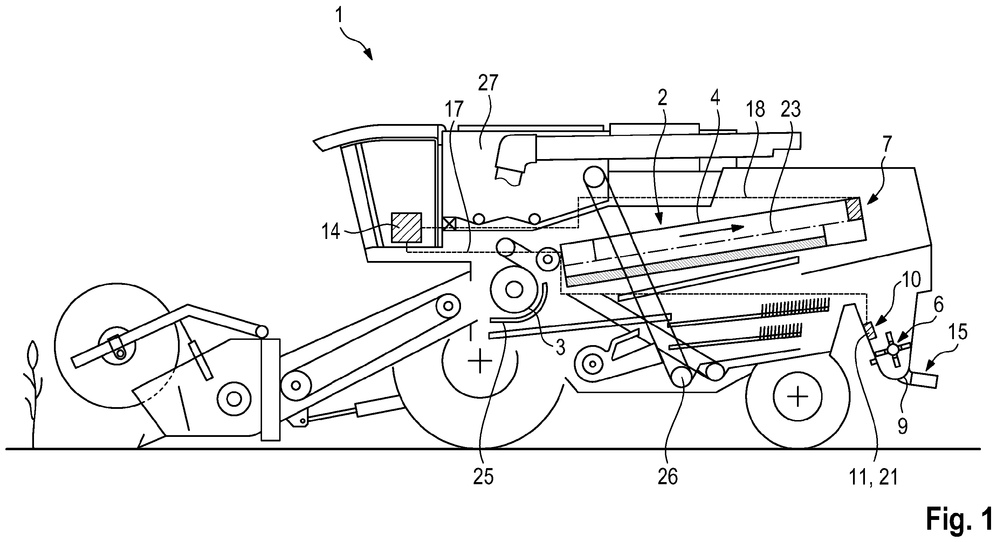

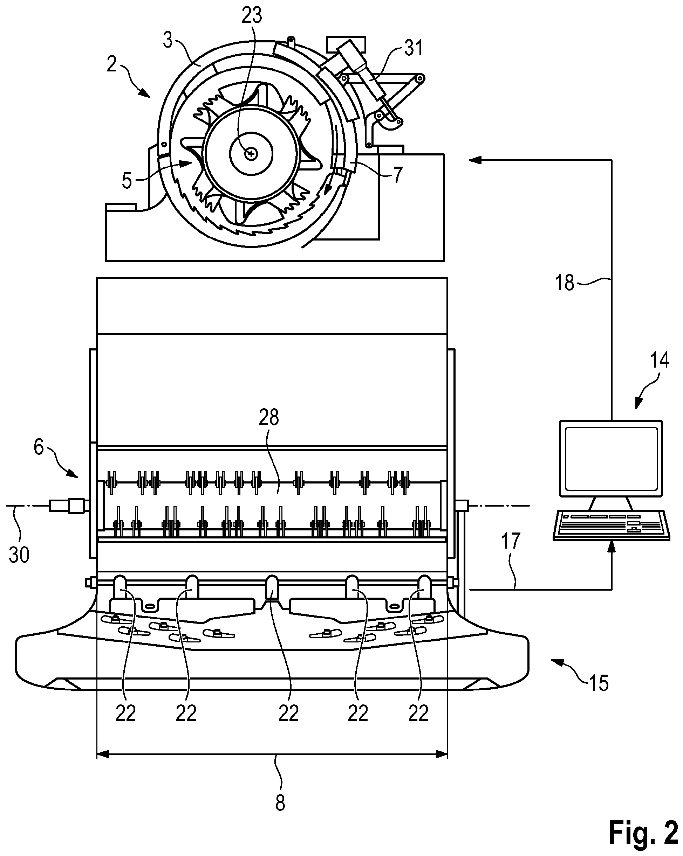

Ein Ausführungsbeispiel, das in den **Figuren 1 bis 9** gezeigt ist, umfasst einen erfindungsgemäßen Mähdrescher **1,** der mit einem Axialabscheider **2** ausgestattet ist. Dieser ist einem Dreschorgan **3** nachgeschaltet, von dem aus ein Erntegutstrom an den Axialabscheider **2** übergeben wird. Mittels des Dreschorgans **3** werden geernteten Pflanzen bearbeitet, sodass Früchte von verbleibenden Pflanzenresten abgelöst werden. Ein Großteil der Früchte wird durch einen Dreschkorb **25** hindurch unmittelbar in Richtung einer Fördereinrichtungen **26** abgeleitet, mittels der die Früchte in einen Korntank **27** förderbar sind. Die verbleibenden Pflanzenreste werden gemeinsam mit restlichen Früchten, die nicht unmittelbar mittels des Dreschorgans **3** abgeschieden werden konnten, an den Axialabscheider **2** übergeben. Die restlichen Früchte und die Pflanzenreste bilden mithin gemeinsam den Erntegutstrom. Der Axialabscheider **2** dient dazu, die in dem übernommenen Erntegutstrom enthaltenen Früchte von den Pflanzenresten zu trennen, sodass die Früchte möglichst vollständig gewonnen werden. Der Erntegutstrom wird mittels des Axialabscheiders **2** infolge Abtrennung des von Früchten gebildeten Gutanteils in einen Restgutstrom überführt. Letzterer besteht im Wesentlichen aus Pflanzenresten, enthält jedoch in aller Regel noch einen Restanteil Früchte.

Die Abscheidung der Früchte erfolgt mittels eines um seine Längsachse **23** drehantreibbaren Axialrotors **5,** der innerhalb eines Gehäuses **3** des Axialabscheiders **2** gelagert ist. An einem dem Dreschorgan **3** abgewandten rückwärtigen Ende des Axialabscheiders **2** umfasst selbiger ein Leitelement **7,** das hier von einem Leitblech gebildet ist, das einer Krümmung des Gehäuses **3** entsprechend gekrümmt ausgebildet ist. Das Leitelement **7** ist bewegbar relativ zu dem Gehäuse **3** ausgebildet und wirkt zu diesem Zweck mit einem elektrohydraulischen Aktor **31** zusammen, mittels dessen das Leitelement **7** antreibbar ist. Der den Axialabscheider **2** verlassende Restgutstrom, der innerhalb des Gehäuses **3** spiralförmig bzw. wendelförmig geführt wird, verlässt den Axialabscheider **2** schwerpunktmäßig an einem begrenzten Umfangsbereich des Gehäuses **3.** Das Leitelement **7** ist diesem Umfangsbereich zugeordnet, sodass das Leitelement **7** eine Strömung des Restgutstroms beeinflussen kann. Insbesondere ragt das Leitelement **7** in einen Strömungsbereich des Restgutstroms hinein, sodass der Restgutstrom beim Verlassen des Axialabscheiders **2** auf das Leitelement **7** treffen kann und hierdurch umlenkbar ist. Mittels Bewegung des Leitelements **7** relativ zu dem Gehäuse **3** kann der Einfluss des Leitelements **7** auf die Art bzw. die Intensität der Umlenkung des Restgutstroms verändert werden. Dies hat zur Folge, dass der Restgutstrom in Abhängigkeit von einer Stellung des Leitelements **7** in unterschiedlicher Art und Weise an ein dem Axialabscheider **2** nachgeschaltetes Arbeitsorgan **6** übergeben wird. Letzteres ist hier als Häckselorgan ausgebildet.

Das Arbeitsorgan **6** ist vertikal unterhalb des Axialabscheiders **2** angeordnet, sodass das aus dem Axialabscheider **2** abgegebene Restgut gewissermaßen in das Arbeitsorgan **6** fällt. Das Arbeitsorgan **6** verfügt über eine langgestreckte Welle **28,** an deren äußerer Mantelfläche eine Vielzahl von Schlagmessern **29** angeordnet sind. Diese sind gelenkig an der Welle **28** befestigt, sodass sie im Zuge einer Rotation der Welle **28** um eine Antriebsachse **30** des Arbeitsorgans **6** aufgrund wirkender Fliehkräfte radial nach außen geschleudert werden. Die im Zuge der Rotation der Welle **28** wirkende kinetische Energie wird dazu verwendet, um mittels der Schlagmesser **29** das in das Arbeitsorgan **6** herabfallende Restgut zu zerkleinern. Die Welle **28** des Arbeitsorgans **6** erstreckt sich über eine Breite **8,** die mithin die Breite **8** des Arbeitsorgans **6** darstellt. Mittels des Leitelements **7** ist es nunmehr möglich, den Restgutstrom über die Breite **8** des Arbeitsorgans **6** zu verteilen, sodass das Arbeitsorgan **6** über seine Breite **8** hinweg möglichst gleichmäßig mit Restgut beschickt wird. Hieraus ergibt sich, dass eine Weitergabe des gehäckselten Restguts an nachgeschaltete Auswurfeinrichtungen **9** gleichermaßen in einer zu gleichen Teilen stattfindenden Verteilung erfolgt, wodurch wiederum ein gleichmäßiger Abwurf des Restguts an dem rückwärtigen Ende des Mähdreschers **1** begünstigt wird. In dem vorliegenden Beispiel umfasst der Mähdrescher **1** insgesamt zwei Auswurfeinrichtungen **9,** die nebeneinander angeordnet sind und dem Arbeitsorgan **6** nachgeschaltet sind. Im Ergebnis hat die Stellung des Leitelements **7** an dem Axialabscheider **2** einen mittelbaren Einfluss darauf, in welcher Weise das Restgut im Zuge seines Auswurfs aus dem Mähdrescher **1** auf dem Feld verteilt wird. Eine Veränderung der Stellung des Leitelements **7** relativ zu dem Gehäuse **4** des Axialabscheiders **2** führt folglich dazu, dass sich auch die Verteilung des Restguts auf dem Feld verändert.

Der Mähdrescher **1** ist mit einem Regelkreis ausgestattet, der hier eine Sensoreinrichtung **10** sowie eine Regeleinheit **14** umfasst. Die Sensoreinrichtung **10** dient dazu, Daten betreffend eine Ist-Verteilung des Restguts stromabwärts des Axialabscheiders **2** zu erfassen und diese Daten an die Regeleinheit **14** weiterzuleiten. Dies kann insbesondere mittels einer Leitung **17** erfolgen. Eine kabellose Übertragung der Daten ist jedoch gleichermaßen möglich. Die erfassten Daten sind mittels der Regeleinheit **14** verarbeitbar, sodass Regelungsbefehle für das Leitelement **7** erzeugbar sind. Letzteres ist hier mittels einer Leitung **18** mit der Regeleinheit **14** verbunden, sodass die Regelungsbefehle zumindest mittelbar an das Leitelement **7** leitbar sind. Das Leitelement **7** umfasst einen Aktor **31,** der hier von einem elektrohydraulischen Zylinder gebildet ist. Der Aktor **31** ist mittels der Regeleinheit **14** ansteuerbar, sodass das Leitelement **7** bewegt wird. Diese Bewegung kann nunmehr infolge der Rückkopplung über die mittels der Sensoreinrichtung **10** erfassten Daten derart geregelt werden, dass sich die Verteilung des aus dem Axialabscheider **2** abgegebenen Restguts über die Breite **8** des nachgeschalteten Arbeitsorgans 6 verändert. Insbesondere ist auf der Regeleinheit **14** bzw. einem Datenspeicher derselben mindestens eine vorgegebene Soll-Verteilung gespeichert, die mit einer mittels der Sensoreinrichtung **10** erfassten Ist-Verteilung vergleichbar ist. Auf diese Weise ist eine Abweichung der Ist-Verteilung von der Soll-Verteilung ermittelbar, infolge der die Regelungsbefehle für das Leitelement **7** erzeugbar sind. Die Soll-Verteilung kann insbesondere ein ausgeglichenes Verteilverhältnis des Restgutstroms auf die beiden Auswurfeinrichtungen **9** vorsehen.

Somit ist es beispielsweise denkbar, dass mittels einer Sensoreinrichtung **10,** die an einer Messstelle **11** in einem Einfallbereich **19** des Arbeitsorgans **6** angeordnet ist, festgestellt wird, dass die linke Seite des Arbeitsorgans **6** einen größeren Anteil des von dem Axialabscheider **2** übergebenen Restgutstroms erhält als die rechte Seite. Dies hat zur Folge, dass die Ist-Verteilung des Restgutstroms auch beim Austritt aus dem Arbeitsorgan **6** und mithin bei Übergabe an die Auswurfeinrichtungen **9** asymmetrisch ist. Die vorgegebene Soll-Verteilung sieht jedoch eine gleichmäßige Verteilung des Restgutstroms an beide Auswurfeinrichtungen **9** vor. Der Unterschied zwischen der Ist-Verteilung und der Soll-Verteilung wird mittels der Regeleinheit **14** dahingehend umgesetzt, dass ein Regelungsbefehl an den Aktor **31** des Leitelements **7** geleitet wird, infolgedessen das Leitelement **7** bewegt wird. Diese Bewegung erfolgt derart, dass die mittels des Leitelements **7** bewirkte Ablenkung und die sich daraus ergebende Verteilung des Restgutstroms auf das Arbeitsorgan **6** dahingehend verändert wird, dass der rechten Seite des Arbeitsorgans 6 ein größerer Anteil des Restgutstroms zugeleitet wird als zuvor. In mittelbarer Folge dieses Eingriffs wird die Ist-Verteilung des Restgutstroms an die Soll-Verteilung angenähert.

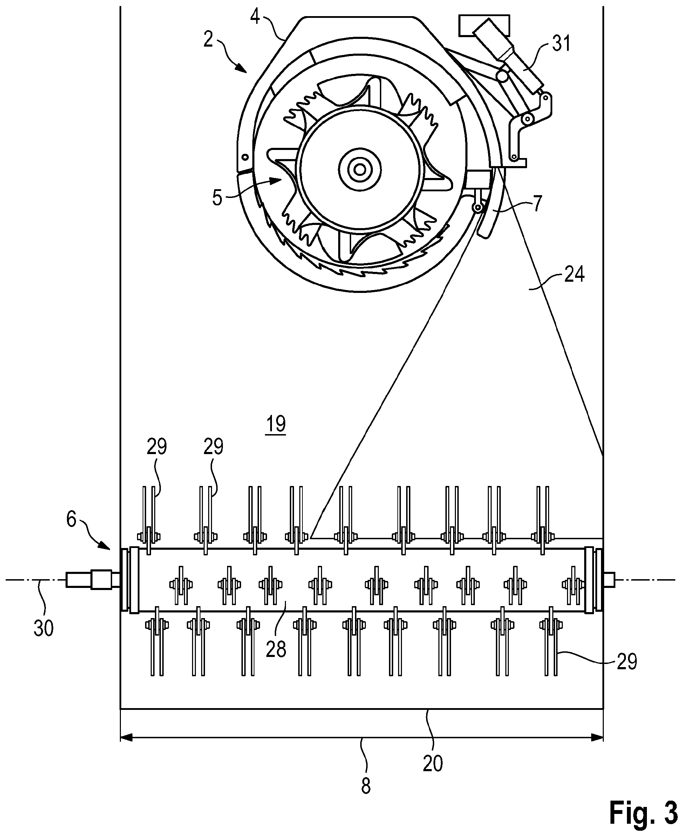

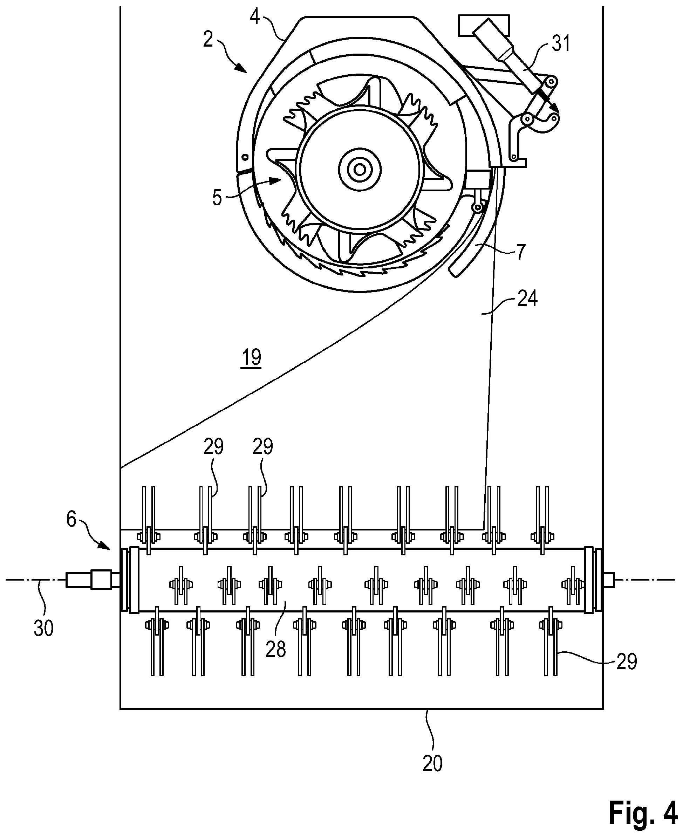

Erfindungsgemäß wird das Leitelement **7** fortwährend relativ zu dem Gehäuse **3** des Axialabscheiders **2** bewegt, um den Restgutstrom kontinuierlich über die Breite **8** des Arbeitsorgans **6** zu verteilen. Dabei führt das Leitelement 7 eine "pendelnde" Bewegung aus, in deren Zuge das Leitelement 7 fortwährend zwischen einander gegenüberliegenden extremalen Stellungen bewegt wird. Dies ist besonders gut anhand der **Figuren 3** **und** **4** erkennbar, in denen das Leitelement **7** in verschiedenen Stellungen dargestellt ist, die wiederum mit verschiedenen Verteilbereichen **24** korrespondieren, über die der aus dem Axialabscheider **2** austretende Restgutstrom verteilt wird. Eine pendelnde Bewegung des Leitelements **7** ist mithin besonders günstig, um das Arbeitsorgan **6** fortwährend über seine gesamte Breite **8** gleichmäßig mit Restgut zu beschicken und hierdurch eine entsprechende gleichteilige Beschickung der Auswurfeinrichtungen **9** zu erzielen.

Mittels der Regeleinheit **14** ist es erfindungsgemäß möglich, den Aktor **31** des Leitelements **7** derart anzusteuern, dass eine Bewegungscharakteristik des Leitelements **7** verändert wird. Hierdurch wird der Effekt erzielt, dass der Restgutstrom fortan auf andere Art und Weise verteilt wird, als dies vor der Veränderung der Bewegungscharakteristik der Fall war. Der Eingriff in die Bewegungscharakteristik des Leitelements **7** erfolgt dabei derart, dass die Ablenkung des Restgutstroms mittels des Leitelements **7** zu einer Verteilung des Restgutstroms auf das Arbeitsorgan **6** führt, die zumindest näher an der Soll-Verteilung ist als die Ist-Verteilung vor der Veränderung der Bewegungscharakteristik. Da Daten betreffend die Verteilung des Restgutstroms mittels der Sensoreinrichtung **10** fortwährend erfasst werden, kann entsprechend eine fortwährende Anpassung der Bewegungscharakteristik des Leitelements **7** stattfinden, deren Einfluss sodann unmittelbar wieder geprüft wird. Folglich bilden die Sensoreinrichtung **10,** die Regeleinheit **14** und das Leitelement **7** einen Regelkreis.

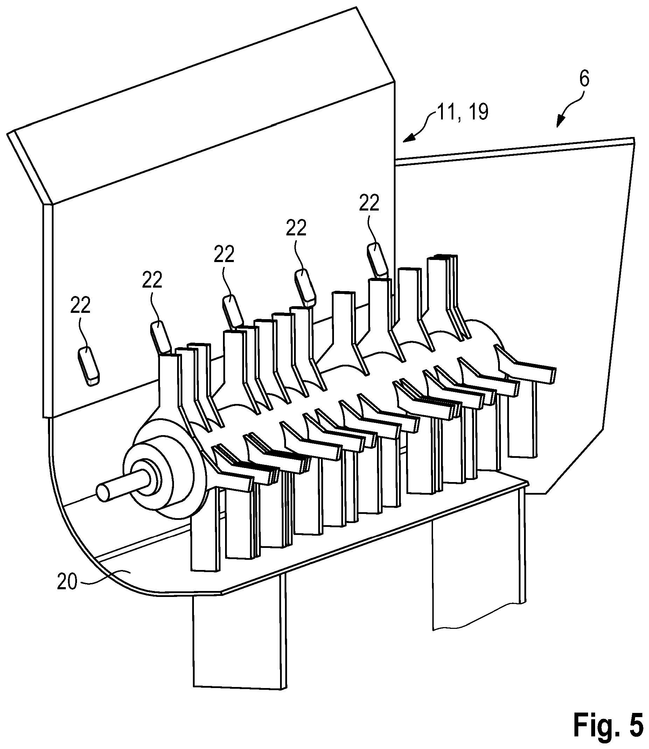

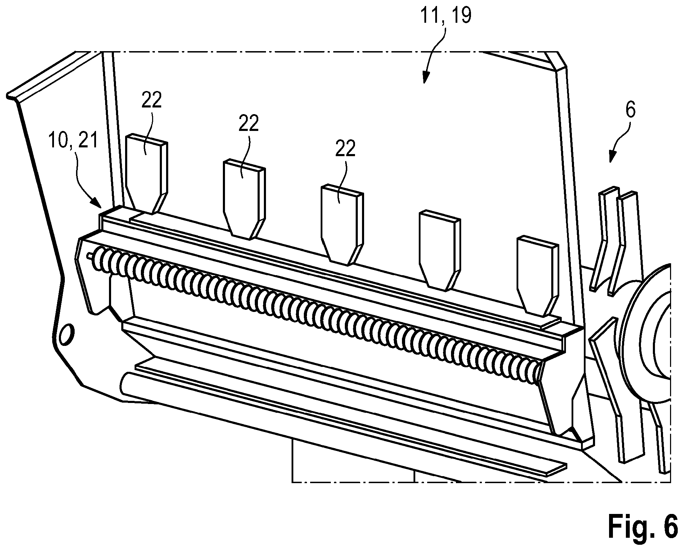

In dem gezeigten Beispiel umfasst der Mähdrescher **1** eine Mehrzahl von Sensoreinrichtungen **10,** die an verschiedenen Messstellen **11, 12, 13** angeordnet sind. Vorstehend bereits beschrieben ist eine erste Sensoreinrichtung **10,** die an einer ersten Messstelle **11** im Einfallbereich **19** des Arbeitsorgans **6** angeordnet ist. Diese Sensoreinrichtung **10,** die sich besonders gut anhand der **Figuren 5** **und** **6** ergibt, ist in dem gezeigten Beispiel als Messleiste **21** ausgebildet, die eine Mehrzahl von Sensorelementen **22** umfasst. Diese Sensorelemente **22** sind hier äquidistant über eine Länge der Messleiste **21** verteilt angeordnet, wobei sich die Messleiste **21** über die gesamte Breite **8** des Arbeitsorgans **6** erstreckt. Mittels der Mehrzahl von Sensorelementen **22** kann die Ist-Verteilung des Restgutstroms über die Breite **8** des Arbeitsorgans **6** besonders gut erfasst werden.

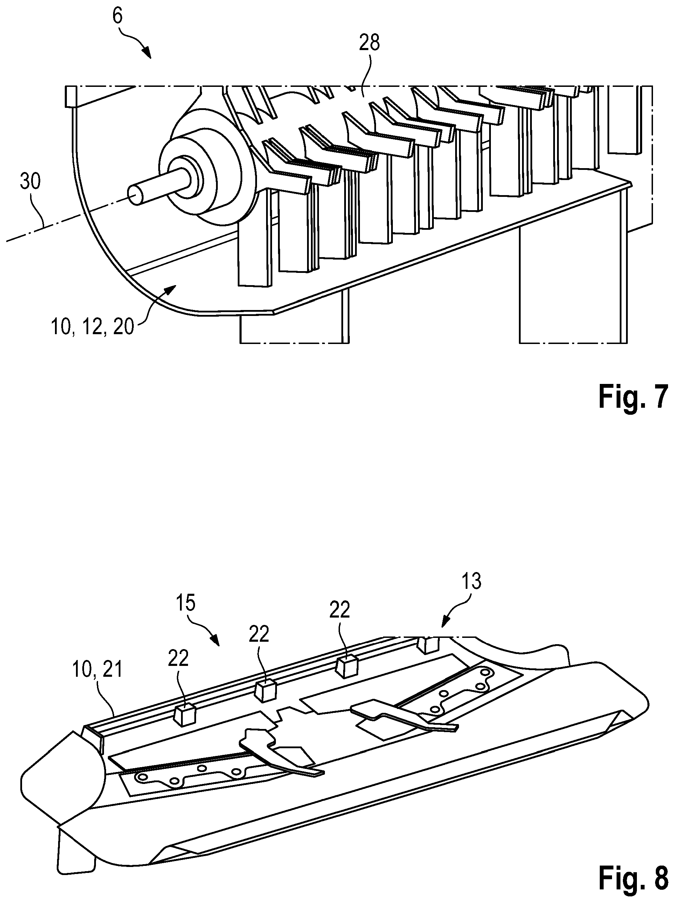

Weiterhin umfasst der Mähdrescher **1** an einer zweiten Messstelle **12** eine weitere Sensoreinrichtung **10.** Die Messstelle **12** befindet sich dabei an einem Bodenblech **20** des Arbeitsorgans **6.** Dies ergibt sich besonders gut anhand von **Figur 7****.** Während mittels der ersten Sensoreinrichtung **10** an der Messstelle **11** die Ist-Verteilung des Restguts im Zuge des Eintritts in das Arbeitsorgan **6** erfassbar ist, ist es mittels der zweiten Sensoreinrichtung **10** besonders gut möglich, Daten betreffend die Ist-Verteilung des Restguts direkt innerhalb des Arbeitsorgans **6** zu erfassen. Auf diese Weise ist es möglich, einen Einfluss des Arbeitsorgans **6** auf die Ist-Verteilung des Restguts über die Breite **8** des Arbeitsorgans **6** zu berücksichtigen.

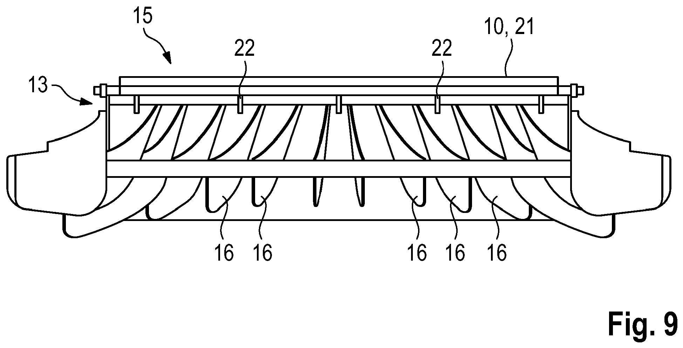

Schließlich verfügt der hier gezeigte Mähdrescher **1** über eine dritte Sensoreinrichtung **10,** die gleichermaßen in Form einer Messleiste **21** ausgebildet ist. Diese befindet sich an einer Messstelle **13,** die einer Verteileinrichtung **15** zugeordnet ist. Die Verteileinrichtung **15** ist den beiden Auswurfeinrichtungen **9** nachgeschaltet. Sie dient dazu, das mittels der Auswurfeinrichtungen **9** ausgeworfenen Restgut über eine Auswurfbreite zu verteilen, die eine Breite des rückwärtigen Endes des Mähdreschers **1** deutlich übersteigt. Mit anderen Worten wird der ausgeworfen Restgutstrom mittels der Verteileinrichtung **15** gewissermaßen "aufgefächert", sodass eine Verteilung des Restguts über eine gesamte Arbeitsbreite des Mähdreschers **1** möglich ist. Hierzu verfügt die Verteileinrichtung **15,** die sich besonders gut anhand der **Figuren 8** **und** **9** ergibt, über eine Vielzahl von Leitblechen **16,** mittels derer die Auffächerung des Restgutstroms erfolgt. Die Sensoreinrichtung **10** umfasst hier insgesamt fünf Sensorelemente **22,** die äquidistant über eine Länge der Messleiste **21** verteilt angeordnet sind. Mittels der Sensorelemente **22** ist es möglich, Daten betreffend die Ist-Verteilung des Restgutstroms über eine Breite der Verteileinrichtung **15** hinweg zu erfassen. Hierdurch werden Daten erfasst, die die Ist-Verteilung des Restgutstroms unmittelbar vor dessen Austritt aus dem Mähdrescher **1** charakterisieren.

In dem gezeigten Beispiel sind in besonders vorteilhafter Weise mehrere Leitbleche **16** jeweils mittels eines zugeordneten Aktors, der in den Figuren nicht dargestellt ist, relativ zu der übrigen Verteileinrichtung **15** verstellbar. Der Aktor ist kabellos, das heißt mittels einer Funkverbindung, mit der Regeleinheit **14** verbunden. Hierdurch verfügt der erfindungsgemäße Mähdrescher **1** über einen zweiten Regelkreis, mittels dessen ein Abgleich der Ist-Verteilung des Restguts im Bereich der Verteileinrichtung **15** mit einer entsprechend vorgegebenen Soll-Verteilung durchgeführt, Regelungsbefehle erzeugt und schließlich eine Stellung der bewegbaren Leitblechen **16** verändert werden. Dies geschieht mit der Maßgabe, etwaige Abweichungen der Ist-Verteilung des Restguts von der Soll-Verteilung in der Verteileinrichtung **15** dadurch auszugleichen, dass der Auswurf des Restguts mittels einer Veränderung der Stellung der jeweiligen Leitbleche **16** verändert wird, sodass die Abweichungen der Ist-Verteilung von der Soll-Verteilung im Zuge des Auswurfs des Restgutstroms ausgeglichen werden und das Restgut letzten Endes in einer möglichst homogen Verteilung auf dem Feld abgelegt wird.

Die Kombination zweier Regelkreise ist besonders vorteilhaft, da auf diese Weise die Ist-Verteilung des Restguts an mehreren Stellen regelbar ist, wodurch insgesamt der Restgutstrom auf seinem Weg ausgehend von dem Axialabscheider **2** bis zum Auswurf aus dem Mähdrescher **1** derart beeinflussbar ist, dass eine homogene Verteilung auf dem Feld erreicht werden kann.

### Bezugszeichenliste

- 1: Mähdrescher
- 2: Axialabscheider
- 3: Dreschorgan
- 4: Gehäuse
- 5: Axialrotor
- 6: Arbeitsorgan
- 7: Leitelement
- 8: Breite
- 9: Auswurfeinrichtung
- 10: Sensoreinrichtung
- 11: Messstelle
- 12: Messstelle
- 13: Messstelle
- 14: Regeleinheit
- 15: Verteileinrichtung
- 16: Verteilblech
- 17: Leitung
- 18: Leitung
- 19: Einfallbereich
- 20: Bodenblech
- 21: Messleiste
- 22: Sensorelement
- 23: Längsachse
- 24: Verteilbereich
- 25: Dreschkorb
- 26: Fördereinrichtung
- 27: Korntank
- 28: Welle
- 29: Schlagmesser
- 30: Antriebsachse
- 31: Aktor

## Patentansprüche

1. Verfahren zum Betrieb eines Mähdreschers (1),
wobei ein Erntegutstrom mittels mindestens eines Axialabscheiders (2) bearbeitet und ein dadurch gebildeter Restgutstrom mittels mindestens zweier Auswurfeinrichtungen (9) aus dem Mähdrescher (1) ausgeworfen wird,
wobei der Axialabscheider (2) ein bewegbares Leitelement (7) umfasst, mittels dessen der aus dem Axialabscheider (2) austretende Restgutstrom auf ein dem Axialabscheider (2) nachgeschaltetes Arbeitsorgan (6) verteilt wird,
wobei eine Ist-Verteilung des Restgutstroms auf die zwei Auswurfeinrichtungen (9) erfasst wird,
wobei bei Erfassung einer Abweichung der Ist-Verteilung von einer vorgegebenen Soll-Verteilung das Leitelement (7) derart nachgeregelt wird, dass die Ist-Verteilung der Soll-Verteilung zumindest angenähert wird, wobei das Leitelement (7) eine pendelnde Bewegung ausführt, in deren Zuge das Leitelement (7) fortwährend zwischen einander gegenüberliegenden extremalen Stellungen bewegt wird, wobei zwecks Annäherung der Ist-Verteilung an die Soll-Verteilung eine Bewegungsgeschwindigkeit des Leitelements (7) verändert wird, wobei das Verfahren die folgenden Verfahrensschritte umfasst:
- mittels mindestens einer Sensoreinrichtung (10) werden an mindestens einer Messstelle (11, 12, 13) Daten betreffend die Ist-Verteilung des Restgutstroms auf die Auswurfeinrichtungen (9) erfasst; und
- die erfassten Daten werden an eine Regeleinheit (14) geleitet, wobei mittels letzterer die Abweichung der Ist-Verteilung von der Soll-Verteilung ermittelt wird.

2. Verfahren nach Anspruch 1, **dadurch gekennzeichnet, dass** als Soll-Verteilung ein zwischen den Auswurfeinrichtungen (9) ausgeglichenes Verteilverhältnis vorgegeben wird.

3. Verfahren nach Anspruch 1 oder 2, **gekennzeichnet durch** die folgenden Verfahrensschritte:
- Der Restgutstrom wird aus dem Axialabscheider (2) an ein als Häckselorgan ausgebildetes, nachgeschaltetes Arbeitsorgan (6) übergeben, wobei der Restgutstrom mittels des Leitelements (7) über eine Breite (8) des Häckselorgans verteilt wird.
- Mittels des Häckselorgans wird der Restgutstrom gehäckselt und sodann an die Auswurfeinrichtungen (9) übergeben.

4. Verfahren nach Anspruch 1, **dadurch gekennzeichnet, dass** mittels der Regeleinheit (14) in Abhängigkeit von der Abweichung Regelungsbefehle erzeugt und mittelbar oder unmittelbar an das Leitelement (7) übermittelt werden.

5. Verfahren nach einem der Ansprüche 1 bis 4, **dadurch gekennzeichnet, dass** mittels einer Mehrzahl von Sensoreinrichtungen (10) Daten betreffend die Ist-Verteilung des Restgutstroms erfasst werden, wobei die Sensoreinrichtungen (10) vorzugsweise an verschiedenen Messstellen (11, 12, 13) angeordnet sind.

6. Verfahren nach einem der Ansprüche 1 bis 5, **dadurch gekennzeichnet, dass** die Regelung des Leitelements (7) automatisch erfolgt, insbesondere in Abhängigkeit eines Regelungsalgorithmus.

7. Verfahren nach Anspruch 6, **dadurch gekennzeichnet, dass** die Bewegungsgeschwindigkeit des Leitelements (7) fortwährend verändert wird.

8. Verfahren nach einem der Ansprüche 1 bis 87, **dadurch gekennzeichnet, dass** neben den Daten betreffend die Ist-Verteilung des Restgutstroms ferner Daten betreffend
- eine Art eines jeweiligen Ernteguts,
- Erntebedingungen,
- Maschinendaten des Mähdreschers (1) und/oder
- eine Soll-Schwadbreite des ausgeworfenen Restgutstroms erfasst und das Leitelement (7) in Abhängigkeit zumindest eines Teils der erfassten Daten nachgeregelt wird.

9. Verfahren nach einem der Ansprüche 1 bis 8, **dadurch gekennzeichnet, dass** der Mähdrescher (1) eine Verteileinrichtung (15) umfasst, die den Auswurfeinrichtungen (9) nachgeschaltet ist, wobei die Verteileinrichtung (15) eine Mehrzahl von Verteilblechen (16) aufweist, die zum Auffächern des von den Auswurfeinrichtungen (9) ausgeworfene Restgutstroms eingerichetet sind, wobei mindestens ein Verteilblech (16) zum Verstellen ausgebildet ist, wobei mindestens eine Sensoreinrichtung (10) an mindestens einer Messstelle in (13) der Verteileinrichtung (15) angeordnet ist, die zum Erfassen von Daten betreffend eine Ist-Verteilung des Restgutstroms in der Verteileinrichtung (15) eingerichtet ist, wobei das Verteilblech (16) derart nachgeregelt wird, dass die Ist-Verteilung des Restgutstroms in der Verteileinrichtung (15) einer vorgegebenen Soll-Verteilung zumindest angenähert wird.

10. Selbstfahrender Mähdrescher (1) eingerichtet zur Durchführung des Verfahrens nach Anspruch 1, umfassend
- mindestens einen Axialabscheider (2) zur Bearbeitung eines Erntegutstroms, sowie
- mindestens zwei Auswurfeinrichtungen (9) zum Auswurf des Restgutstroms aus dem Mähdrescher (1),
wobei der Axialabscheider (2) mindestens ein bewegbares Leitelement (7) umfasst, mittels dessen ein von dem Axialabscheider (2) austretende Restgutstrom auf ein dem Axialabscheider (2) nachgeschaltetes Arbeitsorgan (6) verteilbar ist, wobei durch
- mindestens eine Sensoreinrichtung (10), mittels der Daten betreffend eine Ist-Verteilung des Restgutstroms auf die Auswurfeinrichtungen (9) erfassbar ist, sowie
- mindestens eine Regeleinheit (14), mittels der von der Sensoreinrichtung (10) erfasste Daten verarbeitbar sind,
wobei die Regeleinheit (14) und das Leitelement (7) mittelbar oder unmittelbar miteinander verbunden sind, sodass Regelungsbefehle, die mittels der Regeleinheit (14) in Abhängigkeit der erfassten Daten erzeugbar sind, in Richtung des Leitelements (7) leitbar sind.

11. Mähdrescher (1) nach Anspruch 10, **dadurch gekennzeichnet, dass** mindestens eine Sensoreinrichtung (10) an mindestens einer Messstelle (11) in einem Einfallbereich (19) eines dem Axialabscheider (2) nachgeschalteten Häckselorgans angeordnet ist.

12. Mähdrescher (1) nach Anspruch 10, **dadurch gekennzeichnet, dass** mindestens eine Sensoreinrichtung (10) an mindestens einer Messstelle (12) an einem Bodenblech (20) eines dem Axialabscheider (2) nachgeschalteten Häckselorgans angeordnet ist.

13. Mähdrescher (1) nach einem der Ansprüche 10 bis 11, **dadurch gekennzeichnet, dass** mindestens eine Sensoreinrichtung (10) an mindestens einer Messstelle (13) an einer den Auswurfeinrichtungen (9) nachgeschalteten Verteileinrichtung (15) angeordnet ist.

14. Mähdrescher (1) nach einem der Ansprüche 10 bis 13, **dadurch gekennzeichnet, dass** mindestens eine Sensoreinrichtung (10) in Form einer Messleiste (21) ausgebildet ist, die eine Mehrzahl voneinander beabstandeter Sensorelemente (22) umfasst

## Claims

1. Method for operating a combine harvester (1), wherein a crop stream is processed by means of at least one axial separator (2) and a residual-material stream formed as a result is ejected from the combine harvester (1) by means of at least two ejectors (9),
wherein the axial separator (2) comprises a movable guide element (7) by means of which the residual-material stream exiting the axial separator (2) is distributed to a working member (6) which is arranged downstream of the axial separator (2),
wherein an actual distribution of the residual-material stream to the two ejectors (9) is detected,
wherein, upon detection of a deviation of the actual distribution from a predefined target distribution, the guide element (7) is readjusted in such a way that the actual distribution is at least brought closer to the target distribution, wherein the guide element (7) performs an oscillating movement during which the guide element (7) is moved continually between mutually opposite extreme positions, wherein, for the purpose of bringing the actual distribution closer to the target distribution, a movement speed of the guide element (7) is changed,
wherein the method comprises the following method steps:
- acquiring data concerning the actual distribution of the residual-material stream to the ejectors (9) at at least one measuring point (11, 12, 13) by means of at least one sensor device (10); and
- conducting the acquired data to a regulating unit (14), wherein the latter is used to determine the deviation of the actual distribution from the target distribution.

2. Method according to Claim 1, **characterized in that** a distribution ratio balanced between the ejectors (9) is predefined as the target distribution.

3. Method according to Claim 1 or 2, **characterized by** the following method steps:
- transferring the residual-material stream from the axial separator (2) to a working member (6) connected downstream that is in the form of a chopping member, wherein the residual-material stream is distributed over a width (8) of the chopping member by means of the guide element (7),
- chopping the residual-material stream, and then transferring it to the ejectors (9), by means of the chopping member.

4. Method according to Claim 1, **characterized in that**, by means of the regulating unit (14), regulating commands are generated according to the deviation and are communicated directly or indirectly to the guide element (7).

5. Method according to one of Claims 1 to 4, **characterized in that** data concerning the actual distribution of the residual-material stream are acquired by means of a plurailty of sensor devices (10), wherein the sensor devices (10) are preferably arranged at different measuring points (11, 12, 13).

6. Method according to one of Claims 1 to 5, **characterized in that** the regulation of the guide element (7) is realized automatically, in particular according to a regulation algorithm.

7. Method according to Claim 6, **characterized in that** the movement speed of the guide element (7) is changed continually.

8. Method according to one of Claims 1 to 87, **characterized in that**, besides the data concerning the actual distribution of the residual-material stream, further data concerning
- a type of a respective crop,
- harvesting conditions,
- machine data of the combine harvester (1), and/or
- a target swath width of the ejected residual-material stream
are acquired, and the guide element (7) is readjusted according to at least some of the acquired data.

9. Method according to one of Claims 1 to 8, **characterized in that** the combine harvester (1) comprises a distributor (15) which is arranged downstream of the ejectors (9), wherein the distributor (15) has a plurality of distribution plates (16) which are configured to fan out the residual-material stream ejected from the ejectors (9), wherein at least one distribution plate (16) is designed for adjustment, wherein at least one sensor device (10) is arranged at at least one measuring point (13) in the distributor (15) and is configured to acquire data concerning an actual distribution of the residual-material stream in the distributor (15), wherein the distribution plate (16) is readjusted in such a way that the actual distribution of the residual-material stream in the distributor (15) is at least brought closer to a predefined target distribution.

10. Self-propelled combine harvester (1) configured to carry out the method according to Claim 1 and comprising
- at least one axial separator (2) for processing a crop stream, and
- at least two ejectors (9) for ejecting the residual-material stream from the combine harvester (1), wherein the axial separator (2) comprises at least one movable guide element (7) by means of which a residual-material stream exiting the axial separator (2) is able to be distributed to a working member (6) which is arranged downstream of the axial separator (2), wherein, by
- at least one sensor device (10) by means of which data concerning an actual distribution of the residual-material stream to the ejectors (9) are able to be acquired and by way of
- at least one regulating unit (14) by means of which data acquired by the sensor device (10) are able to be processed,
wherein the regulating unit (14) and the guide element (7) are connected directly or indirectly to one another so that regulating commands able to be generated by means of the regulating unit (14) according to the acquired data are able to be conducted in the direction of the guide element (7).

11. Combine harvester (1) according to Claim 10, **characterized in that** at least one sensor device (10) is arranged at at least one measuring point (11) in a dropping region (19) of a chopping device, which chopping device is arranged downstream of the axial separator (2).

12. Combine harvester (1) according to Claim 10, **characterized in that** at least one sensor device (10) is arranged at at least one measuring point (12) on a bottom plate (20) of a chopping device, which chopping device is arranged downstream of the axial separator (2).

13. Combine harvester (1) according to either of Claims 10 and 11, **characterized in that** at least one sensor device (10) is arranged at at least one measuring point (13) on a distributor (15) which is arranged downstream of the ejectors (9).

14. Combine harvester (1) according to one of Claims 10 to 13, **characterized in that** at least one sensor device (10) is in the form of a measurement bar (21) which comprises a plurality of sensor elements (22) that are spaced apart from one another.

## Revendications

1. Procédé destiné à faire fonctionner une moissonneuse-batteuse (1),
un flux de produit de récolte étant traité au moyen d'au moins un séparateur axial (2) et un flux de produit résiduel ainsi formé étant éjecté de la moissonneuse-batteuse (1) au moyen d'au moins deux dispositifs d'éjection (9),
le séparateur axial (2) comprenant un élément d'acheminement (7) mobile, au moyen duquel le flux de produit résiduel sortant du séparateur axial (2) est distribué sur un organe de travail (6) monté en aval du séparateur axial (2),
une distribution réelle du flux de produit résiduel sur les deux dispositifs d'éjection (9) étant détectée,
l'élément d'acheminement (7) étant réajusté lorsqu'un écart de la distribution réelle par rapport à une distribution de consigne spécifiée est détecté de telle manière que la distribution réelle se rapproche au moins de la distribution de consigne, l'élément d'acheminement (7) exécutant un mouvement pendulaire, au cours duquel l'élément d'acheminement (7) est déplacé en continu entre des positions extrêmes mutuellement opposées, une vitesse de déplacement de l'élément d'acheminement (7) étant modifiée pour rapprocher la distribution réelle de la distribution de consigne.
le procédé comprenant les étapes de procédé suivantes :
- des données concernant la distribution réelle du flux de produit résiduel sur les dispositifs d'éjection (9) sont détectées sur au moins un point de mesure (11, 12, 13) au moyen d'au moins un dispositif de détection (10) ; et
- les données détectées sont acheminées à une unité de régulation (14), celle-ci permettant de déterminer l'écart de la distribution réelle par rapport à la distribution de consigne.

2. Procédé selon la revendication 1, **caractérisé en ce qu'**un rapport de distribution équilibré entre les dispositifs d'éjection (9) est spécifié comme une distribution de consigne.

3. Procédé selon la revendication 1 ou 2, **caractérisé par** les étapes de procédé suivantes :
- le flux de produit résiduel est transféré du séparateur axial (2) à un organe de travail (6) monté en aval formé comme un organe de hachage, le flux de produit résiduel étant distribué sur une largeur (8) de l'organe de hachage au moyen de l'élément d'acheminement (7).
- le flux de produit résiduel est haché au moyen de l'organe de hachage, puis est transféré aux dispositifs d'éjection (9).

4. Procédé selon la revendication 1, **caractérisé en ce que** des instructions de régulation sont générées au moyen de l'unité de régulation (14) en fonction de l'écart et sont transmises indirectement ou directement à l'élément d'acheminement (7).

5. Procédé selon l'une des revendications 1 à 4, **caractérisé en ce que** des données concernant la distribution réelle du flux de produit résiduel sont détectées au moyen d'une multitude de dispositifs de détection (10), les dispositifs de détection (10) étant disposés de préférence sur différents points de mesure (11, 12, 13).

6. Procédé selon l'une des revendications 1 à 5, **caractérisé en ce que** la régulation de l'élément d'acheminement (7) s'effectue automatiquement, en particulier en fonction d'un algorithme de régulation.

7. Procédé selon la revendication 6, **caractérisé en ce que** la vitesse de déplacement de l'élément d'acheminement (7) est modifiée en continu.

8. Procédé selon l'une des revendications 1 à 87, **caractérisé en ce que** sont détectées en outre, en plus des données concernant la distribution réelle du flux de produit résiduel, des données concernant
- un type d'un produit de récolte respectif,
- des conditions de récolte,
- des données de machine de la moissonneuse-batteuse (1) et/ou
- une largeur d'andain de consigne du flux de produit résiduel éjecté
et l'élément d'acheminement (7) est réajusté en fonction d'au moins une partie des données détectées.

9. Procédé selon l'une des revendications 1 à 8, **caractérisé en ce que** la moissonneuse-batteuse (1) comprend un dispositif de distribution (15), qui est monté en aval des dispositifs d'éjection (9), le dispositif de distribution (15) comportant une multitude de tôles de distribution (16), qui sont mises au point pour répartir le flux de produit résiduel éjecté par les dispositifs d'éjection (9), au moins une tôle de distribution (16) étant formée pour l'ajustement, au moins un dispositif de détection (10) étant disposé sur au moins un point de mesure (13) du dispositif de distribution (15), lequel est mis au point pour détecter des données concernant une distribution réelle du flux de produit résiduel dans le dispositif de distribution (15), la tôle de distribution (16) étant réajustée de telle manière que la distribution réelle du flux de matières résiduelles dans la distribution réelle du flux de produit résiduel dans le dispositif de distribution (15) se rapproche au moins d'une distribution de consigne spécifiée.

10. Moissonneuse-batteuse (1) automotrice mise au point pour mettre en œuvre le procédé selon la revendication 1, comprenant
- au moins un séparateur axial (2) pour le traitement d'un flux de produit de récolte, et
- au moins deux dispositifs d'éjection (9) pour éjecter le flux de produit résiduel de la moissonneuse-batteuse (1),
le séparateur axial (2) comprenant au moins un élément d'acheminement (7) mobile, au moyen duquel un flux de produit résiduel sortant du séparateur axial (2) peut être distribué sur un organe de travail (6) monté en aval du séparateur axial (2),
dans laquelle, par
- au moins un dispositif de détection (10), au moyen duquel des données concernant une distribution réelle du flux de produit résiduel sur les dispositifs d'éjection (9) peuvent être détectées, et
- au moins une unité de régulation (14), au moyen de laquelle des données détectées par le dispositif de détection (10) peuvent être traitées,
l'unité de régulation (14) et l'élément d'acheminement (7) étant reliés l'un à l'autre indirectement ou directement, si bien que des instructions de régulation, qui peuvent être générées au moyen de l'unité de régulation (14) en fonction des données détectées, peuvent être acheminées en direction de l'élément d'acheminement (7).

11. Moissonneuse-batteuse (1) selon la revendication 10, **caractérisée en ce qu'**au moins un dispositif de détection (10) est disposé sur au moins un point de mesure (11) dans une zone d'incidence (19) d'un organe de hachage monté en aval du séparateur axial (2).

12. Moissonneuse-batteuse (1) selon la revendication 10, **caractérisée en ce qu'**au moins un dispositif de détection (10) est disposé sur au moins un point de mesure (12) sur une tôle de fond (20) d'un organe de hachage monté en aval du séparateur axial (2).

13. Moissonneuse-batteuse (1) selon l'une des revendications 10 à 11, **caractérisée en ce qu'**au moins un dispositif de détection (10) est disposé sur au moins un point de mesure (13) sur un dispositif de distribution (15) monté en aval des dispositifs d'éjection (9).

14. Moissonneuse-batteuse (1) selon l'une des revendications 10 à 13, **caractérisée en ce qu'**au moins un dispositif de détection (10) est formé sous la forme d'une barre de mesure (21), qui comprend une multitude d'éléments de détection (22) espacés les uns des autres.
